# EUROPEAN PATENT APPLICATION

(11) **EP 3 422 550 A1**
(43) Date of publication of application: **02.01.2019**
(21) Application number: 17179089.2
(22) Date of filing: 30.06.2017
(51) Int. Cl.: H02M 7/00, H02M 5/42

(54) **DEH POWER SYSTEM FOR A DIRECT ELECTRICAL HEATING LOAD**

(71) Applicant: ABB Schweiz AG, 5400 Baden (CH)
(72) Inventor: HASHEMINEZHAD, Majid, 5067 Bergen (NO)
(74) Representative: Helin, William

(57) **Abstract**

The present disclosure relates to a Direct Electrical Heating, DEH, power system (1-1) for delivering power to at least one DEH load, wherein the DEH power system (1-1) comprises: a multi-winding input transformer (3), a rectifier (5) configured to be connected to the multi-winding input transformer (3), a DC link (7) provided on the DC side of the rectifier (5), an inverter (9a-9n) configured to be connected to the DC link (7), wherein the inverter (9a-9n) has two inverter output terminals (9a-a, 9a-b,...,9n-a, 9n-b) configured to be connected to a DEH load (15a-15n), and a low pass filter (11a-11n) configured to be connected between the two inverter output terminals (9a-a, 9a-b,...,9n-a, 9n-b).

## Description

### TECHNICAL FIELD

The present disclosure generally relates to electric subsea installations and in particular to a power system for a Direct Electrical Heating load.

### BACKGROUND

Direct Electrical Heating (DEH) systems are used to heat oil pipes to prevent waxing, hydrate formation and ice plugs in production pipelines in oil and gas applications. During operation, the current from the DEH power system flows in the electrically conducting pipe structure. The pipeline will thus act as an inductive single-phase load in an electric circuit formed with the DEH system. The pipeline will thus be heated partly because of resistive losses and partly due to induced heat, as alternative current flows through the pipeline and a piggyback cable installed along the pipeline.

Electrical power is typically supplied to a DEH load via a riser cable, which is a subsea cable connection between the topside platform power supply and the pipeline section to be heated.

A conventional DEH system comprises a power transformer for converting the voltage to the required level. The power transformer is furthermore regulating the amount of electric energy supplied to the riser cable and the pipeline. A conventional DEH systems also typically comprises a single-phase reactor and capacitor banks for A) a compensation unit for the power factor (cos (p) correction and B) a symmetration unit for load balancing of a single-phase DEH load equally over the three-phase supply.

A problem with conventional DEH power systems is that those systems are generally restricted to rather short riser cables. Thus, in case of very deep water, significant electrical losses along the riser cable would be obtained. In addition, the existing conventional DEH power systems are basically designed for a specific frequency.

Furthermore, the fine tuning of the DEH power system for compensation of reactive power and the conversion of the single phase inductive load to a three-phase resistive load is challenging and requires a significant footprint for the symmetration and compensation units. There is also a restriction on the length of the pipe to be heated and in order to utilize the DEH power system for a very long cable (>50 km) most probably two or more DEH power systems are needed. Additionally, control of the generated heating is limited in the conventional DEH systems.

The compensation and symmetration units design and technical characteristics are unique for each DEH load and cannot be shared between several slightly different DEH loads, i.e. pipes with different length. This is particularly important in case a very long pipe, around 100 km, is to be heated. The pipe can be divided into a few smaller sections in order to utilize DEH flow assurance for each section. However, separate topside and subsea DEH components are required for each section. Thus, it might not be an optimal solution with respect to cost, number of components, complexity, footprint and weight to feed each subsea load separately from topside.

US2015/0122362 A1 discloses an arrangement comprising a transformer, an AC-DC section, a DC-link and a DC-AC section. The arrangement is for providing direct electrical heating of a pipeline. The arrangement is located topside.

### SUMMARY

In view of the above, a general object of the present disclosure is to provide a DEH power system for delivering power to at least one DEH load which solves or at least mitigates the problems of the prior art.

There is hence according to a first aspect of the present disclosure provided a DEH power system for delivering power to at least one DEH load, wherein the DEH power system comprises: a multi-winding input transformer, a rectifier configured to be connected to the multi-winding input transformer, a DC link provided on the DC side of the rectifier, an inverter configured to be connected to the DC link, wherein the inverter has two inverter output terminals configured to be connected to a DEH load, and a low pass filter configured to be connected between the two inverter output terminals.

A DEH load may be a subsea pipeline or a portion of a subsea pipeline.

Due to the capacitance of the subsea cable and the inductance of the DEH load, there is a likelihood of resonance at higher harmonic components generated by converter. Advantageously, the low pass filter suppresses the high frequency components of the inverter output terminals.

The low pass filter may for example comprise a single-or three-phase reactor and delta or star-connected capacitors.

The inverter may be a voltage source inverter.

The output frequency of the inverter may be controlled in a range of 0-500 Hz, for example in a range of 0-400 Hz. By using a higher frequency, for example between 100 Hz and 400 Hz, such as 150 Hz to 400 Hz or 200 Hz to 400 Hz, the system becomes more flexible and more efficient. Since there is a DC link between the DEH load and feeder, there is no concern with respect to symmetrical load and reactive power compensation.

The multi-winding input transformer may for example be a three-phase transformer.

One embodiment comprises a first single-phase transformer configured to be connected to the low pass filter. In particular, the first single-phase transformer is configured to be connected to the two inverter output terminals. The first single-phase transformer is hence parallel-connected with the low pass filter. The DEH load is connected to the output terminals of the single-phase transformer.

The first single-phase transformer is configured to be connected to the inverter output terminals and feeds the subsea DEH load with a proper voltage level. It furthermore isolates the earthed subsea DEH load from the inverter output terminals.

The first single-phase transformer may be a step-up transformer and/or an isolation transformer.

One embodiment comprises a plurality of inverters, each being configured to be connected to the DC link and each inverter having two inverter output terminals configured to be connected to a respective DEH load, and a plurality of low pass filters, each low pass filter being configured to be connected between the two inverter output terminals of a respective one of the inverters.

The inverters are configured to be parallel-connected to each other. Thus, each inverter may be connected to a respective pipeline or a respective portion of a pipeline.

Since all of the inverters share a common DC link, power delivery to two or more DEH loads may be provided in a more compact and reliable manner, with higher efficiency and lower capital and operational costs.

A modular configuration can be provided where the modules, i.e. three-phase input transformer, the inverters, the first single-phase transformers and low pass filters, selectively can be installed at either topside or the seabed.

In case of deep water and long distance from the topside feeder, all modules can advantageously be installed at the seabed nearby the subsea DEH load. In this case a subsea cable can deliver electric power to the DEH power system.

The output frequency of each inverter may be controlled in a range of 0-500 Hz, for example in a range of 0-400 Hz, such as 100 Hz-400 Hz, such as 150 Hz to 400 Hz or 200 Hz to 400 Hz. The DEH power system may hence comprise a control system configured to control the inverters.

Each inverter of the plurality of inverters may be a voltage source inverter.

One embodiment comprises a plurality of first single-phase transformers, each first single-phase transformer being configured to be connected to a respective low pass filter.

Each first single-phase transformer is hence connected to the two inverter output terminals of the corresponding inverter via a low pass filter. Each first single-phase transformer is hence connected to the inverter output terminals of an inverter via the corresponding low pass filter. Each first single-phase transformer is configured to be connected to a respective DEH load.

Each first single-phase transformer may be a step-up transformer and/or an isolation transformer.

One embodiment comprises a plurality of second single-phase transformers, each second single-phase transformer being configured to be connected to an output of a respective one of the first single-phase transformers. In this case, the second single-phase transformers may be provided closer to the DEH loads, e.g. for voltage step-down and isolation purposes. The second single-phase transformers are configured to be connected to a respective one of the DEH loads.

Each first single-phase transformer may be connected in series with a second single-phase transformer. The first single-phase transformer may for example be a step-up transformer configured to be located topside. Thus, in case of very long distance between a topside inverter and the DEH load, the transmission voltage would be increased in order to reduce losses along the transmission cable/riser cable and increase the maximum amount of transmittable power. The second single-phase transformer could be utilised to adjust the transmission voltage to the required voltage level of the DEH load.

According to one embodiment the multi-winding input transformer is a subsea multi-winding input transformer having a multi-winding input transformer enclosure configured for use at a hydrostatic pressure on the seabed. The multi-winding input transformer enclosure may be of the type which provides an approximately 1 atmosphere pressure inside or one which obtains approximately the hydrostatic ambient pressure. In this latter case, the multi-winding input transformer enclosure may comprise a pressure compensator such as a bellow or a flexible enclosure wall.

According to one embodiment the rectifier and the DC link form a power module having a power module enclosure configured for use at a hydrostatic pressure on the seabed.

The power module enclosure may be of the type which provides an approximately 1 atmosphere pressure inside or one which obtains approximately the hydrostatic ambient pressure. In this latter case, the power module enclosure may comprise a pressure compensator such as a bellow or a flexible enclosure wall. If the power module enclosure is pressure compensated, it may be filled with a liquid such as oil.

It should be noted that any of the enclosures mentioned herein may be filled with a liquid such as oil in examples in which they are pressure compensated.

According to one embodiment the inverter is a subsea inverter having an inverter enclosure configured for use at a hydrostatic pressure on the seabed.

The inverter enclosure may be of the type which provides an approximately 1 atmosphere pressure inside or one which obtains approximately the hydrostatic ambient pressure. In this latter case, the inverter enclosure may comprise a pressure compensator such as a bellow or a flexible enclosure wall.

According to one embodiment the first single-phase transformer is a subsea first single-phase transformer having a first single-phase transformer enclosure configured for use at a hydrostatic pressure on the seabed.

The first single-phase transformer enclosure may be of the type which provides an approximately 1 atmosphere pressure inside or one which obtains approximately the hydrostatic ambient pressure. In this latter case, the first single-phase transformer enclosure may comprise a pressure compensator such as a bellow or a flexible enclosure wall.

It should be noted that several of the components of the DEH power system may share a common enclosure. For example, the multi-winding input transformer enclosure, the power module enclosure and the inverter enclosure may form a single subsea enclosure.

According to one embodiment the low pass filter includes a capacitor bank.

There is according to a second aspect of the present disclosure provided a Direct Electrical Heating, DEH, installation comprising: a DEH load, and a DEH power system according to the first aspect, configured to be connected to the DEH load.

According to one embodiment the DEH load is a pipeline.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
- Fig. 1: schematically depicts a first example of a DEH power system;
- Fig. 2: schematically depicts a second example of a DEH power system;
- Fig. 3: schematically depicts a third example of a DEH power system; and
- Fig. 4: schematically shows a fourth example of a DEH power system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

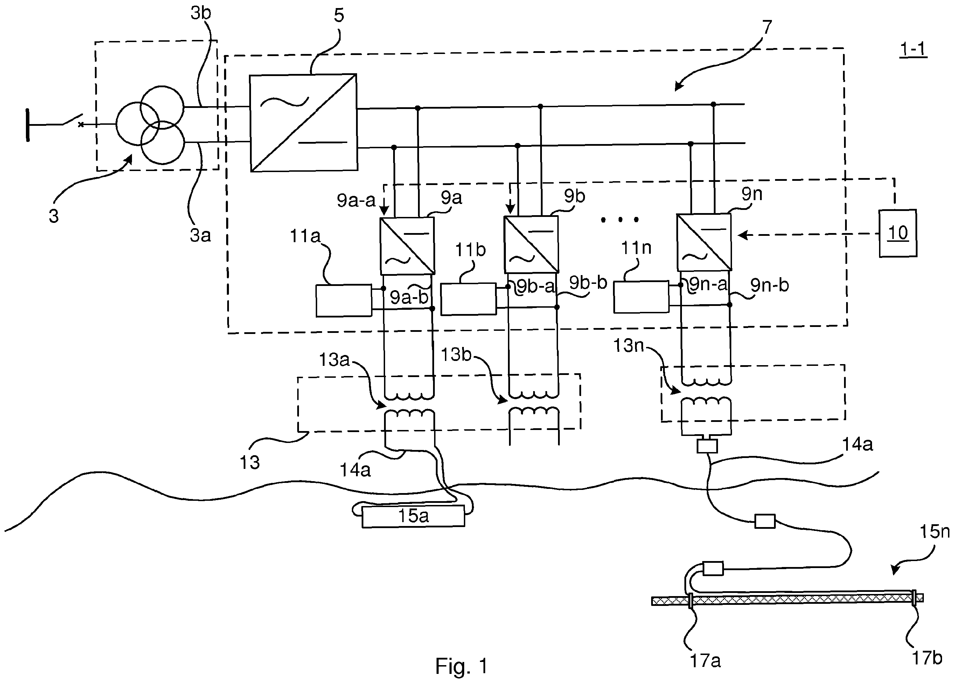

Fig. 1 shows an example of a DEH power system topology. In the exemplified topology all of the modules/components of the DEH power system are provided topside.

The exemplified DEH power system 1-1 includes a multi-winding input transformer 3, or multi-phase input transformer, having two input transformer outputs 3a and 3b which are secondary windings, for example with a 30° phase shift, a rectifier 5 connected to the input transformer outputs 3a and 3b, a DC link 7 formed at the output of the rectifier 5, and a plurality of inverters 9a-9n. Each inverter 9a-9n has its two inputs connected to the DC link 7. The DC link 7 is hence a common DC link for all of the inverters 9a-9n. Each inverter 9a-9n has two inverter output terminals 9a-a, 9a-b, 9b-a, 9b-b,..., 9n-a, 9n-b.

The DEH power system 1-1 furthermore includes a plurality of low pass filters 11a-11n. In particular, there is provided a respective low pass filter 11a-11n for each inverter 9a-9n. Each low pass filter 11a-11n is connected to the two inverter output terminals 9a-a, 9a-b, 9b-a, 9b-b,..., 9n-a, 9n-b of the corresponding inverter 9a-9n. Thus, for example, a first low pass filter 11a of the low pass filters 11a-11n is connected to the two inverter output terminals 9a-a and 9a-b of a first inverter 9a of the inverters 9a-9n.

The DEH power system 1-1 furthermore includes a plurality of first single-phase transformers 13a-13n. Each inverter 9a-9n is connected to a respective one of the first single-phase transformers 13a-13n. Each inverter 9a-9n is connected to a first single-phase transformer 13a-13n via the corresponding low pass filter 11a-11n. The two inverter output terminals 9a-a, 9a-b, 9b-a, 9b-b,..., 9n-a, 9n-b of each inverter 9a-9n is hence connected to a first single-phase transformer 13a-13n. The first inverter 9a is hence connected to the first single-phase transformer 13a of the first single-phase transformers 13a-13n.

The outputs of the first single-phase transformers 13a-13n are connected to a respective one of a DEH load 15a-15n installed on the seabed. The first single-phase transformers 13a-13n are connected to the DEH loads 15a-15n by means of a respective riser cable 14a-14n. DEH load 15a is illustrated in a simplified manner and shows a pipeline, while DEH load 15n depicts a more detailed pipeline structure. Each DEH load 15-15n may be provided with cable terminations 17a and 17b provided at an axial distance from each other. The section of the pipeline located between the two cable terminations 17a and 17b define the portion that is being heated by current provided by a particular one of the first single-phase transformers 13a-13n.

The DEH power system 1-1 may also comprise a control system 10 configured to control the inverters 9a-9n. The control system 10 may be configured to individually control the amplitude of the output signal from each of the inverters 9a-9n. The control system 10 may for example be configured to individually control the output voltage of the inverters 9a-9n. The control system 10 may also be configured to individually control the frequency of the output signal from the inverters 9a-9n. The control system 10 may for example be configured to control the frequency of the output signal in a range of 0-400 Hz. The control system 10 may for example be configured to control the inverters 9a-9n to provide an output with a frequency that is higher than 50/60 Hz, for example at least 100 Hz, such as at least 150 Hz.

In the present example, two or more first single-phase transformers 13a-13b are arranged within a common first single-phase transformer enclosure 13. The first single-phase transformer enclosure 13 may thus contain more than one first single-phase transformer 13a-13n. The first single-phase transformer enclosure 13 may contain a dielectric liquid, such as oil. Alternatively, a first single-phase transformer enclosure may contain only one single-phase transformer, which in the example is the case for the first single-phase transformer 13n.

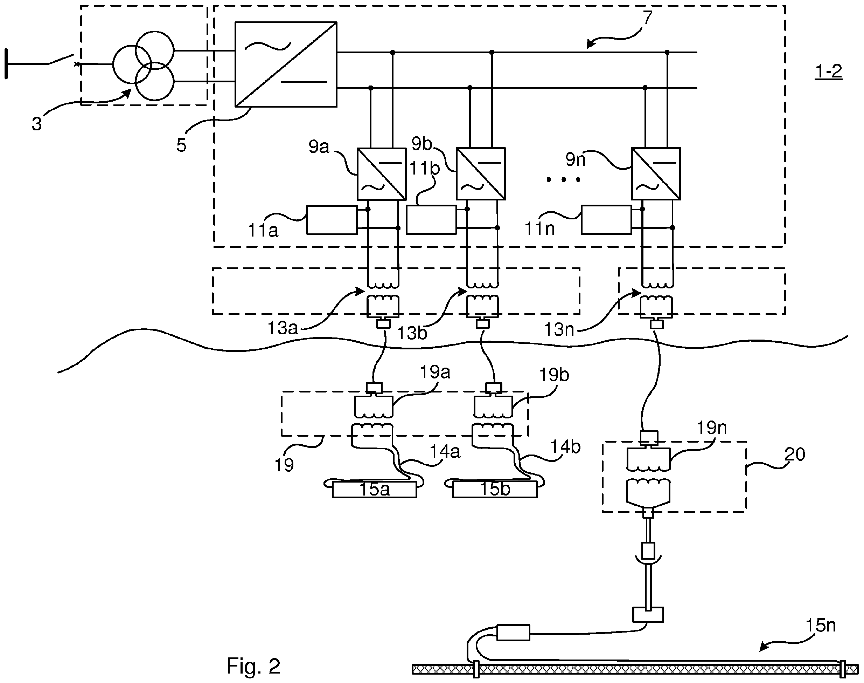

Fig. 2 shows a second example of a DEH power system topology. The topology is similar to the first example shown in Fig. 1. DEH power system 1-2 however additionally comprises a plurality of second single-phase transformers 19a-19n connected to the outputs of a respective one of the first single-phase transformers 13a-13-n. In this example, the first single-phase transformers 13-a13n are step-up transformers provided topside. The second single-phase transformers 19a-19n are step-down transformersinstalled subsea and function as isolation transformers. The second single-phase transformers 19a-19n are connected to a respective DEH load 15a, 15b-15n.

In the example, the second single-phase transformers 19a-19n are provided inside second single-phase transformer enclosures 19 and 20. One or more second single-phase transformers 19a-19b may be provided in a common second single-phase transformer enclosure 19. A second single-phase transformer 19n may be provided in its own second single-phase transformer enclosure 20, which houses only one second single-phase transformer 19n. The second single-phase transformer enclosures 19 and 20 may for example be filled with a dielectric liquid such as oil.

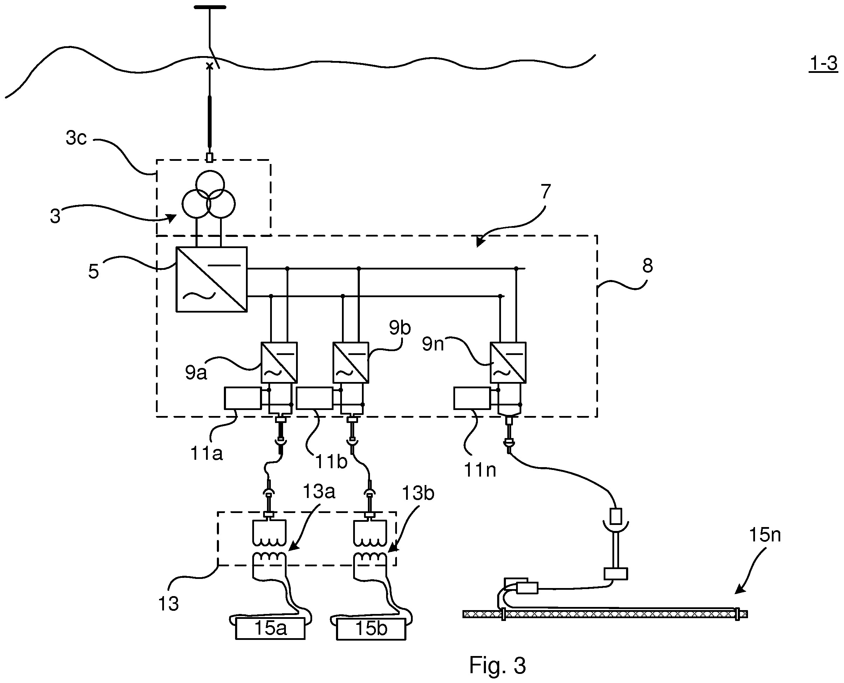

Fig. 3 shows a third example of a DEH power system topology. The system is similar to the first example shown in Fig. 1. DEH power system 1-3 is however configured to be installed on the seabed. The components of the DEH power system 1-3 are therefore contained in enclosures that are able to withstand the hydrostatic pressure on the seabed. Moreover, one of the inverters, inverter 9n, is not connected to any first single-phase transformer. Instead, inverter 9n is connected directly to DEH load 15n.

The DEH power system 1-3 comprises a multi-winding input transformer enclosure 3c containing the multi-winding input transformer 3. The multi-winding input transformer enclosure 3c is configured to withstand the ambient hydrostatic pressure at the seabed.

The DEH power system 1-3 comprises a power module enclosure 8, enclosing a power module formed by the rectifier 5, the DC link 7, and by the inverters 9a-9n. The inverters 9a-9n hence have an inverter enclosure which in this example is formed by the power module enclosure. The power module enclosure 8 is configured to withstand the ambient hydrostatic pressure at the seabed.

The multi-winding input transformer enclosure 3c and the power module enclosure 8 may be separate enclosures, or they may form a single enclosure.

The DEH power system 1-3 also comprises the first single-phase transformer enclosure 13 which contains more than one first single-phase transformer 13a-13n. The first single-phase transformer enclosure 13 is adapted for use at the seabed, and is thus configured to withstand the hydrostatic pressure on the seabed.

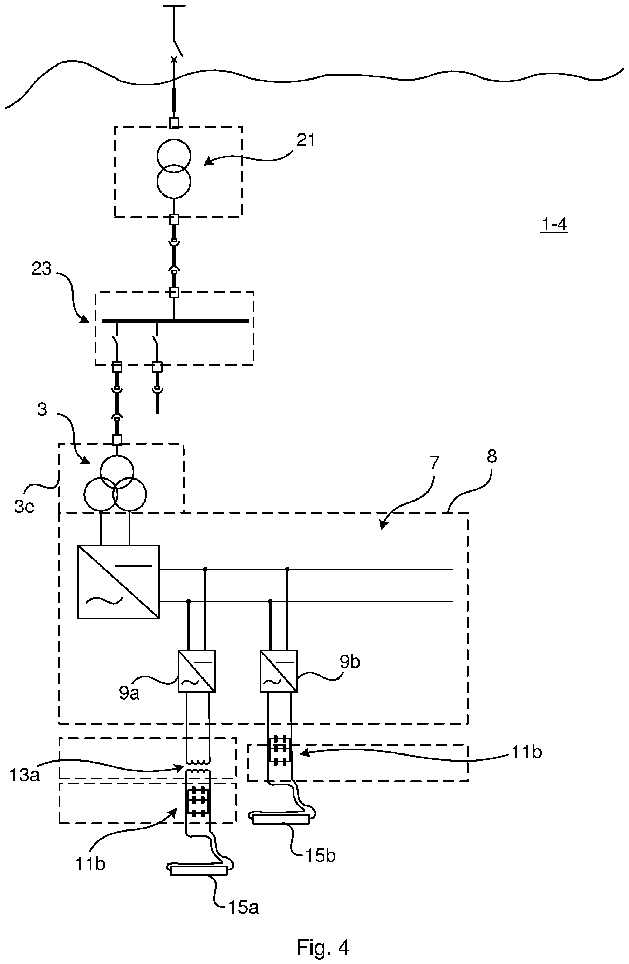

Fig. 4 shows a fourth example of a DEH power system topology. DEH power system 1-4 is similar to the third example shown in Fig. 3. The low pass filters 13a and 13b are here exemplified by subsea capacitor banks.

The DEH power system 1-4 additionally includes a subsea step-down transformer 21 configured to be connected to a topside power source and a subsea switchgear 23. The subsea switchgear 23 is configured to be connected to the input of the multi-winding input transformer 3.

In any examples disclosed herein using subsea enclosures, suitable connectors/penetrators are used for waterproof electrical connections.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A Direct Electrical Heating, DEH, power system (1-1; 1-2; 1-3; 1-4) for delivering power to at least one DEH load, wherein the DEH power system (1-1; 1-2; 1-3; 1-4) comprises:
a multi-winding input transformer (3),
a rectifier (5) configured to be connected to the multi-winding input transformer (3),
a DC link (7) provided on the DC side of the rectifier (5),
an inverter (9a-9n) configured to be connected to the DC link (7), wherein the inverter (9a-9n) has two inverter output terminals (9a-a, 9a-b,...,9n-a, 9n-b) configured to be connected to a DEH load (15a-15n), and
a low pass filter (11a-11n) configured to be connected between the two inverter output terminals (9a-a, 9a-b,...,9n-a, 9n-b).

2. The DEH power system (1-1; 1-2; 1-3; 1-4) as claimed in claim 1, comprising a first single-phase transformer (13a-13n) configured to be connected to the low pass filter (11a-11n).

3. The DEH power system (1-1; 1-2; 1-3; 1-4) as claimed in claim 1 or 2, comprising a plurality of inverters (9a-9n), each being configured to be connected to the DC link (7) and each inverter (9a-9n) having two inverter output terminals (9a-a, 9a-b,...,9n-a, 9n-b) configured to be connected to a respective DEH load (15a-15n), and a plurality of low pass filters (11a-11n), each low pass filter (11a-11n) being configured to be connected between the two inverter output terminals (9a-a, 9a-b,...,9n-a, 9n-b) of a respective one of the inverters (11a-11n).

4. The DEH power system (1-1; 1-2; 1-3; 1-4) as claimed in claim 3, comprising a plurality of first single-phase transformers (13a-13n), each first single-phase transformer (13a-13n) being configured to be connected to a respective low pass filter (11a-11n).

5. The DEH power system (1-1; 1-2; 1-3; 1-4) as claimed in claim 3 or 4, comprising a plurality of second single-phase transformers (19a-19n), each second single-phase transformer (19a-19n) being configured to be connected to an output of a respective one of the first single-phase transformers (13a-13n).

6. The DEH power system (1-3; 1-4) as claimed in any of the preceding claims, wherein the multi-winding input transformer (3) is a subsea multi-winding input transformer having a multi-winding input transformer enclosure (3c) configured for use at a hydrostatic pressure on the seabed.

7. The DEH power system (1-3; 1-4) as claimed in any of the preceding claims, wherein the rectifier (5) and the DC link (7) form a power module having a power module enclosure (8) configured for use at a hydrostatic pressure on the seabed.

8. The DEH power system (1-3; 1-4) as claimed in any of the preceding claims, wherein the inverter (11a-11n) is a subsea inverter having an inverter enclosure configured for use at a hydrostatic pressure on the seabed.

9. The DEH power system (1-2; 1-3; 1-4) as claimed in claim 2 or any of claims 3-8 dependent of claim 2, wherein the first single-phase transformer (13a-13n) is a subsea first single-phase transformer having a first single-phase transformer enclosure (13) configured for use at a hydrostatic pressure on the seabed.

10. The DEH power system (1-4) as claimed in any of the preceding claims, wherein the low pass filter (11a-11n) includes a capacitor bank.

11. A Direct Electrical Heating, DEH, installation comprising:
a DEH load (15a-15n), and
a DEH power system (1-1; 1-2; 1-3; 1-4) as claimed in any of claims 1-10 configured to be connected to the DEH load (15a-15n).

12. The DEH installation as claimed in claim 11, wherein the DEH load (15a-15n) is a pipeline.
